Europäisches Patentamt

(19) European Patent Office

Office européen des brevets

(11) Publication number: **0 039 972**
**B1**

## (12) EUROPEAN PATENT SPECIFICATION

(45) Date of publication of patent specification: **21.09.83**

(51) Int. Cl.³: **C 05 G 3/00, B 01 J 2/30**

(21) Application number: **81200481.0**

(22) Date of filing: **07.05.81**

(54) Process of preparing non-caking granular fertilizers.

(30) Priority: **09.05.80 NL 8002668**

(43) Date of publication of application:
**18.11.81 Bulletin 81/46**

(45) Publication of the grant of the patent:
**21.09.83 Bulletin 83/38**

(84) Designated Contracting States:
**AT BE DE FR GB IT NL SE**

(56) References cited:
**DE - A - 2 122 890**
**FR - A - 2 062 452**
**FR - A - 2 090 752**
**FR - A - 2 155 883**
**FR - A - 2 415 089**

(73) Proprietor: UNIE VAN KUNSTMESTFABRIEKEN B.V.
Maliebaan 81
NL-3581 CG Utrecht (NL)

(72) Inventor: Willems, Michael Hendrik
Nassaustraat 9
NL-6166 BD Geleen (NL)
Inventor: Klok, Jan Willem
Grotthertog Janstraat 7
NL-6164 BV Geleen (NL)

(74) Representative: Roeffen, Wilhelmus Johannes Maria et al,
OCTROOIBUREAU DSM Postbus 9
NL-6160 MA Geleen (NL)

Courier Press, Leamington Spa, England.

# 0 039 972

## Process of preparing non-caking granular fertilizers

The invention relates to a process of preparing non-caking, granular fertilizers, in which fertilizer granules are enveloped with a coating layer consisting of a mixture of one or more polyoxyalkylates, as hereinafter defined, and one or more anionogenic and/or cationogenic surfactants, dissolved in a hydrocarbon oil.

A process of this kind is known from the German Auslegeschrift No. 2,122,890, which describes the application of a coating agent consisting of a polyoxyalkylate and an agent imparting hydrophobicity, such as amines, hydrocarbons or sulphonic acids, optionally dissolved or emulsified in an oil. The oil mentioned is a mineral oil having a viscosity of about 6mPa . s at 50°C.

It has been found that the application of such commercial mixtures for the coating of granular fertilizers leads to products which, admittedly, show hardly any caking tendency, but emit a very annoying odour, and, particularly if the products have a low pH, show strong discolouration. In addition, the coating layer provides to contain polycyclic aromatic compounds. As is known, some of these compounds, e.g. benzopyrene, have carcinogenic properties.

The invention provides a process of preparing non-caking granular fertilizers by a treatment with a multi-component coating material based on polyoxyalkylates, as hereinafter defined, surfactants and a hydrocarbon oil, virtually or completely avoiding the abovementioned drawbacks.

This is achieved in that the hydrocarbon oil used is an oil containing 0—10% by weight aromatic, 35—70% by weight naphthenic, and 30—55% by weight paraffinic hydrocarbons. In this way coated fertilizers are obtained which show hardly any discolouration or none at all, not even if the fertilizers have a very low pH, such as ammonium nitrate, and which do not emit an annoying odour, with, additionally, the content of polycyclic aromatic compounds being negligible.

It has been found that, if the oil used contains a predominant amount of paraffinic hydrocarbons, e.g. more than 55% by weight, the coating mixture used does not dissolve sufficiently in the oil, so that special auxiliary substances, e.g. emulsifiers, have to be added, which considerably increases the cost price of the coating mixture.

It has, further, been found that to achieve a proper distribution of the coating agent over the fertilizer granule the viscosity of the mineral oil used must not be higher than 300 mPa . s, measured at 25°C.

The quantity of hydrocarbon oil in the coating agent may vary within wide limits, e.g. between 25 and 75%wt. By preference use is made of an amount of hydrocarbon oil of 45—65%wt., related to the overall weight of the coating mixture.

Coating components that may be used in combination with the hydrocarbon oil are various polyoxyalkylates and surfactants known per se. The term polyoxyalkylates in this application denotes condensation products of alkene oxides, notably ethylene oxide, with water, alcohols, phenols, amines or carboxylic acids, with an average molecular weight of 300 to 40,000. Also mixtures of polyoxyalkylates and mixed condensates of various alkylene oxides may be used.

The surfactants used may be anionogenic surfactants, such as alkyl-, aryl-, and aralkylsulphonic acids, condensation products and/or salts thereof, as well as cationogenic surfactants, such as aliphatic primary and/or secondary amines. Also mixtures of surfactants may be applied.

The weights of the components of the coating mixture may also be varied within wide limits. Suitable coating agents are, for instance, mixtures consisting to 5—25%wt. of amine or sulphonic acid, to 15—45%wt. of polyoxyalkylate, and to 45—65%wt. of hydrocarbon oil.

Like the composition, also the amount of the coating agent to be used may be varied within wide limits, partly in dependence on the type of the fertilizer to be coated, e.g. from 0.02—2%wt., calculated in relation to the weight of the fertilizer to be coated. In general, use is made of an amount of coating agent of between 0.1 and 0.3%wt., calculated in relation to the weight of the fertilizer to be coated. If so desired, finely divided, optionally inert, solid substances, such as silica, calcium sulphates, or trace elements, such as manganese oxide, cobalt oxide or borates, may be included in the coating agent, to improve the anti-caking effect.

The application of the coating mixture to the granular fertilizer may be carried out in various ways known per se, for instance in a rotating drum or a fluidized bed. The coating agent may be applied to warm fertilizer granules having a temperature of, e.g., 40—90°C, as well as to fertilizer granules cooled to ambient temperature.

The coating process according to the invention can be used for various fertilizers, e.g. ammonium nitrate, calcium ammonium nitrate, ammonium phosphate, ammonium sulphate, urea, as well as for mixed fertilizers. The process is of particular interest for the coating of ammonium nitrate and mixed fertilizers.

The invention will be elucidated in the following examples.

Example 1

Experiment no. 1

1000 grams of a granular NP fertilizer consisting of ammonium nitrate and ammonium phosphate

2

**0 039 972**

and containing 23.2%wt. nitrogen and 22.8%wt. $P_2O_5$, which has a pH of about 3.75, was sprayed in a rotating drum with 2 grams of a molten coating mixture (melting point 38—42°C). The coating mixture had been prepared by mixing 15 parts by weight of octadecylamine and 30 parts by weight of a polyoxyalkylate of the formula $C_{18}H_{37}O(C_2H_2O)_{20}$—H with 55 parts by weight of a mineral oil (see below), and melting the mixture by heating with stirring. The oil used had a viscosity of about 15 mPa . s at 25°C, and contained 2.0%wt. of aromatic, 45.5%wt. of naphthenic, and 52.5% of paraffinic hydrocarbons.

The fertilizer granules were removed from the drum after about 5 minutes and stored in a closed glass vessel. The granules were free-flowing and did not cake, even after several months' storage. Even after several months the product did not show discolouration and was practically odourless.

Experiments nos. 2—4

The process of Expt. no. 1 was repeated, but the mineral oils now applied had the following compositions:

| | Hydrocarbons | | |
|---|---|---|---|
| | Aromatic | Naphthenic | Paraffinic |
| Expt. no. 2 | 8.5%wt. | 37%wt. | 54.5%wt. |
| Expt. no. 3 | 2%wt. | 45%wt. | 53%wt. |
| Expt. no. 4 | 6%wt. | 41%wt. | 53%wt. |

The results were equal to those of Expt. 1.

Example 2 (comparative Example)
Experiments nos. 5—8

The process of Expt. no. 1 was repeated, but the mineral oils now used had the following compositions:

| | Hydrocarbons | | |
|---|---|---|---|
| | Aromatic | Naphthenic | Paraffinic |
| Expt. no. 5 | 29%wt. | 24%wt. | 47%wt. |
| Expt. no. 6 | 40%wt. | 32%wt. | 28%wt. |
| Expt. no. 7 | 40%wt. | 30%wt. | 30%wt. |
| Expt. no. 8 | 44%wt. | 36%wt. | 20%wt. |

The resulting fertilizer granules did not cake even after several months' storage. However, after only a few hours the granules already showed a slight yellow discolouration and gave off an annoying odour.

Example 3
Experiments nos. 9—12

The process of Expts. nos. 1—4 was repeated, but now the treatment was applied to fertilizer granules consisting of ammonium nitrate and ammonium phosphate, and containing 22.9%wt. nitrogen and 23.1%wt. $P_2O_5$, with a pH of 3.2.

The granules did not cake together after the treatment, did not show discolouration and did not give off an annoying odour, not even after having been stored for several months.

Example 4 (comparative Example)
Experiments nos. 13—16

The process of Example 3 was repeated, but now with the same mineral oils being used as in Expt. 5—8.

The resulting granules did not cake together, but showed a strong yellow discolouration within 24 hours. Also they evolved an extraordinarily annoying and penetrant odour.

Example 5
Experiments nos. 17—20

The process of Expts. nos. 1—4 was repeated, but now the treatment was applied to ammonium nitrate prills. The results were the same as those obtained in Expt. 1.

3

**0 039 972**

Example 6 (comparative Example)
Experiments nos. 2 1—24
The process of Example 5 was repeated, but with the same mineral oils being applied as in Expts. 5—8.

Within 24 hours the granules showed a strong brown discolouration and gave off an extraordinarily annoying odour.

**Claims**

1. Process for preparing non-caking, granular fertilizers, in which fertilizer granules are enveloped with a coating layer consisting of a mixture of one or more condensation products of alkylene oxides with water, alcohols, phenols, amines or carboxylic acids, having an average molecular weight of 300—40,000, and one or more anionogenic and/or cationogenic surfactants, dissolved in a hydrocarbon oil, characterized in that the hydrocarbon oil contains 0—10% by weight aromatic, 35—70% by weight naphthenic, and 30—55% by weight paraffinic hydrocarbons.

2. Process according to claim 1, characterized in that the hydrocarbon oil has a viscosity of not more than 300 mPa . s at 25°C.

3. Agent for coating fertilizer granules, this agent consisting of a mixture of one or more condensation products of alkylene oxides with water, alcohols, phenols, amines or carboxylic acids, having an average molecular weight of 300—40,000, and one or more anionogenic and/or cationogenic surfactants, dissolved in a hydrocarbon oil, characterized in that the hydrocarbon oil contains 0—10% by weight aromatic, 35—70% by weight naphthenic, and 30—55% by weight paraffinic hydrocarbons.

**Patentansprüche**

1. Verfahren zur Herstellung von nicht-zusammenbackenden körnigen Düngemitteln, bei dem die Düngemittelkörner mit einer Deckschicht überzogen werden, die aus einem Gemisch eines oder mehrerer Kondensationsprodukte von Alkylenoxiden mit Wasser, Alkoholen, Phenolen, Aminen oder Carbonsäuren, mit einem durchschnittlichen Molekulargewicht von 300 bis 40.000, und einem oder mehreren anionogenen und/oder kationogenen Netzmitteln, gelöst, in einem Kohlenwasserstofföl, besteht, dadurch gekennzeichnet, daß das Kohlenwasserstofföl 0—10 Gew.-% aromatische, 35—70 Gew.-% naphthenische und 30—55 Gew.-% paraffinische Kohlenwasserstoffe enthält.

2. Verfahren nach Anspruch 1, dadurch gekennzeichnet, daß das Kohlenwasserstofföl eine Viskosität von nicht mehr als 300 mPa . s bei 25°C hat.

3. Mittel zum Überziehen von Düngemittelkörnern, das aus einem Gemisch eines oder mehrerer Kondensationsprodukte von Alkylenoxiden mit Wasser, Alkoholen, Phenolen, Aminen oder Carbonsäuren, mit einem durchschnittlichen Molekulargewicht von 300 bis 40.000, und einem oder mehreren anionogenen und/oder kationogenene Netzmitteln, gelöst, in einem Kohlenwasserstofföl, besteht, dadurch gekennzeichnet, daß das Kohlenwasserstofföl 0—10 Gew.-% aromatische, 35—70 Gew.-% naphthenische und 30—55 Gew.-% paraffinische Kohlenwasserstoffe enthält.

**Revendications**

1. Procédé de préparation d'engrais granulés non agglutinants, selon lequel des granules d'engrais sont enrobés d'une couche de revêtement constituée d'un mélange d'un ou de plusieurs produits de condensation d'oxydes d'alcoylène avec de l'eau, des alcools, des phénols, des amines ou des acides carboxyliques ayant un poids moléculaire moyen de 300—40.000, et d'un ou de plusieurs agents tensio-actifs anioniques et/ou cationiques dissous dans une huile d'hydrocarbures, caractérisé en ce que l'huile d'hydrocarbures contient 0—10% en poids d'hydrocarbures aromatiques, 35—70% en poids d'hydrocarbures naphténiques et 30—55% en poids d'hydrocarbures paraffiniques.

2. Procédé selon la revendication 1, caractérisé en ce que l'huile d'hydrocarbures a une viscosité qui n'est pas supérieure à 300 mPa . s, mesurée à 25°C.

3. Agent de revêtement de granules d'engrais, constitué d'un mélange d'un ou de plusieurs produits de condesnation d'oxydes d'alcoylène avec de l'eau, des alcools, des phénols, des amines ou des acides carboxyliques, ayant un poids moléculaire moyen de 300—40.000, et d'un ou de plusieurs agents tensio-actifs anioniques et/ou cationiques dissous dans une huile d'hydrocarbures, caractérisé en ce que l'huile d'hydrocarbures contient 0—70% en poids d'hydrocarbures aromatiques, 35—70% en poids d'hydrocarbures naphténiques et 30—55% en poids d'hydrocarbures paraffiniques.

4